(19) Europäisches Patentamt
European Patent Office
Office européen des brevets

(11) **EP 4 614 521 A1**

(12) **EUROPEAN PATENT APPLICATION**

(43) Date of publication:
**10.09.2025 Bulletin 2025/37**

(21) Application number: **24162244.8**

(22) Date of filing: **08.03.2024**

(51) International Patent Classification (IPC):
**G21K 1/00** (2006.01)  **G06N 10/40** (2022.01)

(52) Cooperative Patent Classification (CPC):
**G21K 1/00; G06N 10/40**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Infineon Technologies Austria AG**
**9500 Villach (AT)**

(72) Inventors:
• **BRANDL, Matthias**
**85614 Kirchseeon (DE)**

• **MEGIER, Nina Agnieszka**
**9500 Villach (AT)**
• **REPP, Jens**
**85570 Markt Schwaben (DE)**
• **COLOMBE, Yves**
**9500 Villach (AT)**

(74) Representative: **Lambsdorff & Lange Patentanwälte**
**Partnerschaft mbB**
**Grillparzerstraße 12A**
**81675 München (DE)**

(54) **DEVICES FOR CONTROLLING TRAPPED IONS HAVING SPECIFIC ELECTRODE CHARACTERISTICS**

(57) A device (300) for controlling trapped ions includes a structured electrode layer, wherein the structured electrode layer forms multiple electrodes of an ion trap configured to trap ions in a zone above the structured electrode layer. The multiple electrodes include a first RF electrode (2A) and a second RF electrode (2B) extending along a first direction. The multiple electrodes further include at least one center DC electrode (6) arranged between the first RF electrode and the second RF electrode and extending along the first direction. A first width of the first RF electrode and a second width of the second RF electrode decrease along the first direction.

Fig. 3

EP 4 614 521 A1

**Description**

Technical Field

The present disclosure relates to devices for controlling trapped ions having specific electrode characteristics.

Background

Devices for controlling trapped ions may include RF (radio frequency) and DC (direct current) electrodes. When feeding RF signals into a feeding point of an ion trap device, a voltage drop may occur along the shuttling path. Such dependency of the RF voltages on a distance to the feeding point may affect radial motion frequencies of an ion and thus shuttling sequences. In this context, it may be desirable to provide a shuttling of ions along shuttling paths where RF voltages are kept on a more stable level (e.g., where the RF voltages do not substantially decrease along the shuttling path). It may further be desirable to develop solutions supporting a straightforward and easy scaling of ion trap devices in order to trap a larger number of ions.

Summary

An aspect of the present disclosure relates to a device for controlling trapped ions. The device comprises a structured electrode layer, wherein the structured electrode layer forms multiple electrodes of an ion trap configured to trap ions in a zone above the structured electrode layer. The multiple electrodes comprise a first RF electrode and a second RF electrode extending along a first direction. The multiple electrodes further comprise at least one center DC electrode arranged between the first RF electrode and the second RF electrode and extending along the first direction. A first width of the first RF electrode and a second width of the second RF electrode decrease along the first direction.

A further aspect of the present disclosure relates to a device for controlling trapped ions. The device comprises a structured electrode layer, wherein the structured electrode layer forms multiple electrodes of an ion trap configured to trap ions in a zone above the structured electrode layer. The multiple electrodes comprise at least one RF electrode extending along a first direction and a plurality of DC electrodes arranged along the at least one RF electrode. The device further comprises an RF feeding point configured to feed an alternating electrical current into the at least one RF electrode. The device further comprises electronic circuitry electrically coupled to the plurality of DC electrodes and configured to adjust a voltage at a respective DC electrode depending on a distance between the respective DC electrode and the RF feeding point.

Brief Description of the Drawings

Devices in accordance with the disclosure are described in more detail below based on the drawings. Similar reference numerals may designate corresponding similar parts. The technical features of the various illustrated examples may be combined unless they exclude each other and/or can be selectively omitted if not described to be necessarily required.

Figure 1A schematically illustrates a top view of a structured electrode layer including an RF electrode and multiple DC electrodes.

Figure 1B illustrates a modelling of the RF electrode of Figure 1 as a series of similar segments.

Figure 2 shows a diagram illustrating a dependency between a drop-off voltage applied to an RF electrode and a number of segments of the RF electrode.

Figure 3 schematically illustrates a top view of a device 300 for controlling trapped ions in accordance with the disclosure.

Figure 4 schematically illustrates a top view of a device 400 for controlling trapped ions in accordance with the disclosure.

Figure 5 schematically illustrates a top view of a device 500 for controlling trapped ions in accordance with the disclosure.

Figure 6 schematically illustrates a top view of a device 600 for controlling trapped ions in accordance with the disclosure.

Figure 7 schematically illustrates a top view of a device 700 for controlling trapped ions in accordance with the disclosure.

Figure 8 schematically illustrates a top view of a device 800 for controlling trapped ions in accordance with the disclosure.

Figure 9 schematically illustrates a top view of a device 900 for controlling trapped ions in accordance with the disclosure.

Figure 10 illustrates electronic circuitry 1000 that may be included in a device for controlling trapped ions in accordance with the disclosure.

Figure 11 illustrates electronic circuitry 1100 that may be included in a device for controlling trapped ions in accordance with the disclosure.

Figure 12 illustrates electronic circuitry 1200 that may be included in a device for controlling trapped ions in accordance with the disclosure.

Figure 13 illustrates electronic circuitry 1300 that may be included in a device for controlling trapped ions in accordance with the disclosure.

Figure 14 illustrates electronic circuitry 1400 that may be included in a device for controlling trapped ions in accordance with the disclosure.

Detailed Description

The devices described herein may be configured to trap ions and control the trapped ions. It is to be noted that the following description is not restricted to ions, but may also be applied to atoms, molecules or other quantum particles/-systems (e.g. electrons or defect centers). In particular, the trapped ions may be physically grouped in ion chains (or ion strings or ion crystals). An ion chain may include one or multiple ions of the same or different species, wherein each of the ions may represent a physical qubit. In the following, the terms "ion" and "ion chain" may be used interchangeably at times. In some examples, the devices described herein may be used for quantum computing, but are not restricted thereto. Trapped ions are one of the most promising candidates for being used as qubits in quantum computers, since they can be trapped with long lifetimes in a scalable array by means of electromagnetic fields. Other applications may be in the field of atomic clocks.

The ions trapped in an ion trap device may be shuttled (or transported) along shuttling paths of the device. The shuttling paths may include straight sequences, but also junctions, such as X-junctions and/or T-junctions. For example, the shuttling paths may extend above a structured electrode layer including multiple electrodes of the ion trap device. In particular, a shuttling path may be arranged in a plane over such a structured electrode layer. Time-dependent electric fields may be used for shuttling ions along the shuttling paths. A shuttling of the ions may be controlled by electric voltages applied to the electrodes of the structured electrode layer. In particular, the ions may be moved along shuttling paths by means of AC and DC voltages that may be separately coupled to specific electrodes of the structured electrode layer. For example, the structured electrode layer may include one or more RF electrodes for RF trapping and a plurality of DC electrodes for static electric-field trapping and/or for moving the ions within the ion trap. Ion trap devices as described herein may be configured to trap a plurality of ions that may be individually addressable and movable by appropriately controlling the electric potentials of the electrodes.

In a specific but non-limiting example, the ion traps of the devices described herein may correspond to or may include a surface ion trap (or surface-electrode ion trap). In surface ion traps all electrodes (i.e. the DC electrodes and the RF electrodes) may be arranged in a same single plane. The ions may be stored and shuttled above this single plane. However, it is to be understood that the concepts described herein are not restricted to surface ion traps. In further examples, devices for controlling trapped ions in accordance with the disclosure may also be based on three-dimensional ion trap geometries.

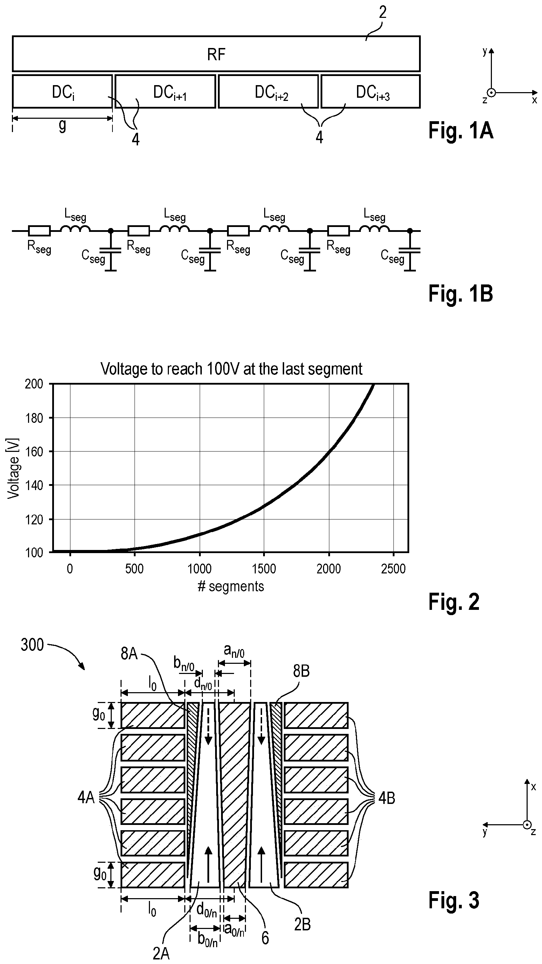

Referring now to Figure 1A, a structured electrode layer of an ion trap device may include at least one RF electrode 2 and a plurality of DC electrodes 4. The RF electrode 2 may extend in the x-direction, and the DC electrodes 4 may be arranged along the RF electrode 2. In the illustrated example, only one RF electrode 2 and an exemplary number of four DC electrodes 4 are illustrated for the sake of simplicity. In practice, a structured electrode layer of an ion trap device may include more than one (e.g. at least two) RF electrodes 2. In addition, dozens or hundreds of DC electrodes 4 may be arranged along the RF electrodes 2. In the illustrated example, each DC electrode 4 may have a same length g when measured in the x-direction. In a non-limiting example, the length $g$ may have a value in a range from about $30\mu$m to about $200\mu$m. However, a smaller or larger length $g$ may also be possible depending on circumstances and applications. Note that more detailed geometries of electrode structures in accordance with the disclosure are shown and described below in connection with Figures 3 to 8.

Figure 1B illustrates the RF electrode 2 of Figure 1A modelled as a series of multiple segments. When measured in the x-direction, a length of each segment may be similar to the length g of the DC electrodes 4. Each segment may be modelled to include a resistance $R_{seg}$, an inductance $L_{seg}$ and a capacitance $C_{seg}$ connected in the manner shown. Values of these quantities may depend on geometric and material properties of the RF electrode 2 and the frequency of an alternating electrical current fed into the RF electrode 2 at an RF feeding point. For example, the values of $R_{seg}$, $L_{seg}$ and $C_{seg}$ may be determined by means of simulations.

An impedance associated with the n-th segment or an impedance $Z_n$ of the RF electrode 2 with length n. g may be expressed by the recursive equation

$$Z_n = R_{seg} + i\omega L_{seg} + \cfrac{1}{(i\omega C_{seg} + \cfrac{1}{Z_{n-1}})} \qquad (1)$$

Based on equation (1) a drop-off voltage may be determined. The drop-off voltage may be defined as the voltage $V_n$ that needs to be applied at an RF feeding point that feeds an AC current into the RF electrode 2 in order to achieve a voltage of 100V at the last segment $n$ of the RF electrode 2, i.e. at the segment furthest away from the RF feeding point. The drop-off voltage may be expressed by the recursive equation

$$V_n = V_{n-1}\left(1 - \frac{R_{seg} + i\omega L_{seg}}{Z_n}\right) \qquad (2)$$

Referring now to Figure 2, a diagram illustrates a dependency between the drop-off voltage $V_n$ of equation (2) and the number of segments $n$ of the RF electrode 2 (i.e. the length of the RF electrode 2). It is to be understood that the displayed values for the voltage $V_n$ and the number of segments are exemplary and in no way limiting. From the diagram it can be seen that the drop-off voltage may increase with the number of segments. Accordingly, the voltage along the RF electrode 2 (or along the trapping axis) may decrease.

A change or decrease in voltage along the RF electrode 2 may change radial frequencies associated with the pseudopotential of the ion trap. Such radial frequencies may correspond to or may include frequencies of a secular motion as an averaged solution of the Mathieu equations. A change of these radial frequencies may affect the shuttling sequences for voltages applied to the DC electrodes 4. Therefore, for a proper shuttling of ions along shuttling paths, the RF and DC electrical fields may need to match, in particular when shuttling ions through junctions. In order to guarantee an appropriate operation of the ion trap device and a stable shuttling of ions, it may thus be desirable to provide substantially constant trapping frequencies and matching RF and DC voltages along the shuttling paths. In the following, various examples of devices for controlling trapped ions including structured electrode layers configured to provide matching RF and DC voltages and thus constant radial frequencies along the shuttling paths are described.

Referring now to Figure 3, a top view of a device 300 for controlling trapped ions is illustrated. More particular, a structured electrode layer of the device 300 is shown. The structured electrode layer may form multiple electrodes of an ion trap configured to trap ions in a zone above the structured electrode layer. The trapped ions may be located at a height $h$ and spaced apart from the structured electrode layer in the z-direction.

The multiple electrodes may include a first RF electrode 2A and a second RF electrode 2B extending along a first direction, for example in the x-direction. Shuttling paths of the device 300 may extend along the RF electrodes 2A and 2B. In the shown case, the RF electrodes 2A and 2B may be separated from each other along their entire length. In another case, the RF electrodes 2A and 2B may correspond to two arms or two branches of a single electrode that may e.g. be fork-shaped. In the illustrated example, a width $b_n$ of the first RF electrode 2A and the second RF electrode 2B may decrease along the positive x-direction.

The multiple electrodes may further include a center DC electrode 6 arranged between the first RF electrode 2A and the second RF electrode 2B. The center DC electrode 6 may extend along the x-direction. In particular, the center DC electrode 6 may be arranged directly below ions trapped above the structured electrode layer. In the illustrated example, a width $a_n$ of the center DC electrode 6 may increase along the positive x-direction.

In addition, the multiple electrodes may include a first plurality of first DC electrodes 4A arranged adjacent to the first RF electrode 2A and a second plurality of second DC electrodes 4B arranged adjacent to the second RF electrode 4B. The DC electrodes 4A and 4B may be referred to as DC shuttling electrodes and may be arranged opposite to the center DC electrode 6. In the illustrated example, a length $l_0$ of the first DC electrodes 4A and the second DC electrodes 4B measured in the y-direction may be constant along the x-direction.

The device 300 may correspond to or may include a surface ion trap having a five-wire geometry. In particular, the surface of the ion trap may be symmetric with regard to an axis extending in the x-direction through the center DC electrode 6. It is however to be understood that aspects described herein are not restricted to such geometries, but may also hold true for other types of ion traps and/or electrode geometries as, for example, asymmetric five-wire (where the RF electrodes 2A and 2B may have different widths) or four wire surface ion traps (where the width of one of the RF electrodes may be much larger than the other one and the height h of an ion trapped above the structured electrode layer).

The device 300 may include an RF feeding point configured to feed an alternating electrical current into at least one of the first RF electrode 2A and the second RF electrode 2B. In particular, an oscillating electrical potential with a peak value of $V_0$ may be applied at the RF feeding point. In some examples, an RF feeding point may be arranged at the upper end sections of the RF electrodes 2A, 2B. In further examples, an RF feeding point may be arranged at the lower end sections of the RF electrodes 2A, 2B. A width of the RF electrodes 2A, 2B at the RF feeding point may be denoted as $b_0$. In a similar fashion, a width of the center DC electrode 6 at the RF feeding point may be denoted as $a_0$. Furthermore, a height of an ion trapped above the structured electrode layer at the RF feeding point may be denoted as $h_0$.

In some examples, a position of the RF feeding point and thus a direction of an alternating electrical current injected into the RF electrodes 2A, 2B may depend on a relation between the values $a_0, b_0, a_n$ and $b_n$. In a first case, if e.g.

$$\frac{1}{2}a_n + b_n < \frac{1}{2}a_0 + b_0$$

, the RF feeding point may be located at the lower end sections of the RF electrodes 2A, 2B and the electrical current may be injected in a bottom-up direction (see solid arrows). Here, the width $b_n$ of the first RF electrode 2A and the second RF electrode 2B may decrease in a direction pointing away from the RF feeding point. In a second case, if e.g. $\frac{1}{2}a_n + b_n > \frac{1}{2}a_0 + b_0$, the RF feeding point may be located at the upper end sections of the RF electrodes 2A, 2B and the electrical current may be injected in a top-down direction (see dashed arrows). Here, the width $b_n$ of the first RF electrode 2A and the second RF electrode 2B may increase in a direction pointing away from the RF feeding point.

A height $h$ of an ion trapped above the structured electrode layer may be determined according to

$$h = \frac{\sqrt{a(a + 2b)}}{2} \qquad (3)$$

wherein $a$ is the width of the center DC electrode 6 and $b$ is the width of the RF electrodes 2A, 2B at the position of the ion. By choosing the electrodes 2A, 2B and 6 to have geometries with varying widths $a_n$ and $b_n$ as previously described, it may be provided that the minimum of the pseudopotential may remain at a constant height, i.e. $h_n = h_0$. That is, the ion may be trapped at a same height along the RF electrodes 2A, 2B (i.e. along the shuttling line). In addition, the varying widths $a_n$ and $b_n$ of the electrodes 2A, 2B and 6 as previously described may provide that the radial frequencies associated with the pseudopotential may remain constant along the RF electrodes 2A, 2B.

The described geometry of the structured electrode layer may be configured to compensate a voltage drop-off along the ion trap axis as discussed in connection with Figures 1 and 2. Since the generated pseudopotential may be the same along the RF electrodes 2A and 2B (and thus along the shuttling line), an additional change in the geometry of the DC electrodes 4A and 4B may not be required. That is, a width $l_0$ of the DC electrodes 4A and 4B measured in the y-direction and a size $g_0$ of the DC electrodes 4A and 4B measured in the x-direction may be constant. Shuttling sequences for the voltages applied to the DC electrodes 4A and 4B may remain the same and may have similar impact on the trapped ions in every region of the ion trap. A change of the electronics architecture for controlling the DC electrodes 4A and 4B may therefore not be required.

The device 300 may include one or more ground planes. In the illustrated example, a first ground plane 8A may be arranged between the first RF electrode 2A and the first DC electrodes 4A. Additionally, or alternatively, a second ground plane 8B may be arranged between the second RF electrode 2B and the second DC electrodes 4B. Using one or more ground planes may be required in some examples for providing constant lengths $l_0$ of the DC electrodes 4A, 4B along the RF electrodes 2A, 2B. In addition, or alternatively, the ground planes may be required for providing a constant distance $d_n$ between the DC electrodes 4A, 4B and the center DC electrode 6 along the x-direction, i.e. $d_n = d_0$.

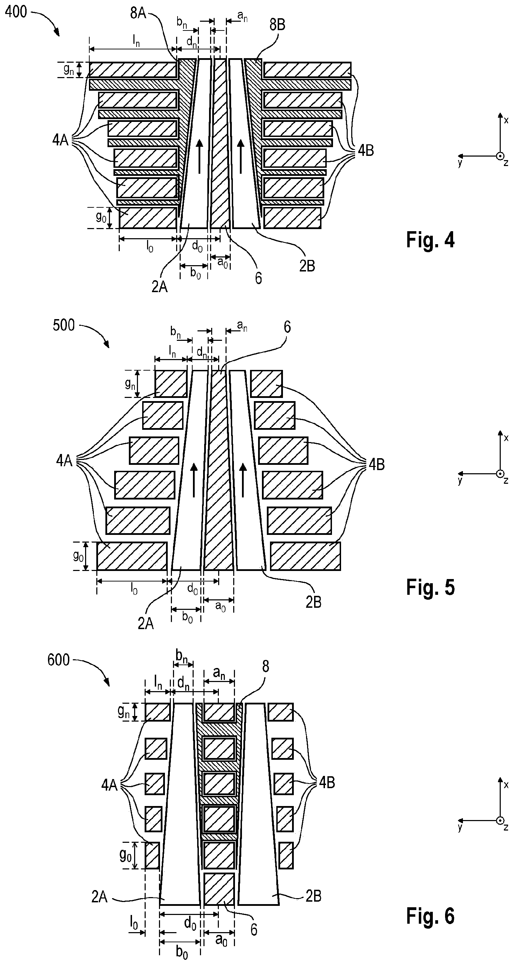

Referring now to Figure 4, a top view of a device 400 for controlling trapped ions is illustrated. Similar to the example of Figure 3, the device 400 may be configured to provide a shuttling of ions based on constant radial frequencies along the shuttling paths. The device 400 of Figure 4 may include some or all features of the device 300 of Figure 3. The device 400 may correspond to or may include a surface ion trap having a five-wire geometry symmetric with regard to an axis extending in the x-direction.

In the illustrated example, the width $b_n$ of the first RF electrode 2A and the second RF electrode 2B may decrease along the positive x-direction. In addition, the width $a_n$ of the center DC electrode 6 may decrease along the positive x-direction. A length $l_n$ of the first DC electrodes 4A and the second DC electrodes 4B measured in the y-direction may increase along the positive x-direction. In some examples, a size $g_n$ of the DC electrodes 4A and 4B, when measured in the x-direction, may decrease along the positive x-direction. In the illustrated example, an RF feeding point may be arranged at the lower end sections of the RF electrodes 2A, 2B and an electrical current may be injected in a bottom-up direction (see solid arrows).

The device 400 may include one or more ground planes. In the illustrated example, the device 400 may include a first ground plane 8A that may be arranged between the first RF electrode 2A and the first DC electrodes 4A as well as between individual DC electrodes of the first DC electrodes 4A. In addition, a second ground plane 8B may be arranged between the second RF electrode 2B and the second DC electrodes 4B as well as between individual DC electrodes of the second DC electrodes 4B. In the illustrated example, each of the ground planes 8A and 8B may be formed as a single piece. In further examples, one or both of the ground planes 8A and 8B may be segmented into multiple segments. Similar to the example of Figure 3, the ground planes may be required for providing a constant distance $d_n$ between the DC electrodes 4A, 4B and the center DC electrode 6 along the x-direction, i.e. $d_n = d_0$.

Similar to the example of Figure 3, the electrode geometry of Figure 4 may provide that the radial frequencies associated with the pseudopotential may remain constant along the shuttling path, i.e. along the RF electrodes 2A and 2B. In contrast to the example of Figure 3, a minimum of the pseudopotential may differ along the shuttling path. That is, the height of the ion above the structured electrode layer may change along the shuttling line ($h_n = h_0$). Such change in height may require a change in the geometry of the shuttling DC electrodes 4A and 4B as previously described in order to keep the shuttling sequences for voltages applied to the DC electrodes 4A and 4B the same along the shuttling line.

In this context, and in some examples, the geometries of the electrodes may be chosen such that the trap depth may stay optimal along the shuttling line. Referring back to equation (3), this may be the case, if the ratio $\frac{b}{a}$ remains constant. Accordingly, the following choices may be made

$$b_n = \beta_n b_0 \qquad\qquad a_n = \beta_n a_0 \qquad\qquad (4)$$

such that the height of the ion above the structured electrode layer may also scale with $\beta_n$, i.e.

$$h_n = \beta_n h_0 \qquad\qquad (5)$$

Referring now to Figure 5, a top view of a device 500 for controlling trapped ions is illustrated. Similar to previous examples, the device 500 may be configured to provide a shuttling of ions based on constant radial frequencies along the shuttling paths. The device 500 may include some or all features of previously described devices. The device 500 may correspond to or may include a surface ion trap having a five-wire geometry symmetric with regard to an axis extending in the x-direction.

In the illustrated example, a width $a_n$ of the center DC electrode 6 and a width $b_n$ of the RF electrodes 2A, 2B may decrease along the positive x-direction, respectively. In addition, lengths $l_n$ of the first DC electrodes 4A and the second DC electrodes 4B measured in the y-direction may decrease along the positive x-direction. In the shown case, an RF feeding point may be arranged at the lower end sections of the RF electrodes 2A, 2B and an electrical current may be injected into the RF electrodes 2A, 2B in a bottom-up direction (see solid arrows). In the illustrated example, the DC electrodes 4A and 4B may have a rectangular shape. In further examples, a shape of the first DC electrodes 4A and/or a shape of the second DC electrodes 4B may change along the x-direction.

The device 500 does not necessarily include ground planes. An introduction of ground planes may be avoided by varying the distance $d_n$ between the DC electrodes 4A, 4B and the center DC electrode 6 along the x-direction. In the illustrated example, the distance $d_n$ may decrease in the positive x-direction. In particular, the distance $d_n$ may scale with the factor $\beta_n$ of equations (4) and (5), i.e.

$$d_n = \beta_n d_0 \qquad\qquad (6)$$

Referring now to Figure 6, a top view of a device 600 for controlling trapped ions is illustrated. Similar to previous examples, the device 600 may be configured to provide a shuttling of ions based on constant radial frequencies along the shuttling paths. The device 600 may include some or all features of previously described devices. The device 600 may correspond to or may include a surface ion trap having a five-wire geometry symmetric with regard to an axis extending in the x-direction.

The center DC electrode 6 of the device 600 may be segmented. In a non-limiting example, the center DC electrode 6 may be segmented in a uniform manner. However, in further examples, the center DC electrode 6 is not necessarily segmented in a uniform manner. Segments of the center DC electrode 6 may be arranged at substantially the same x-coordinates as respective opposite electrodes of the DC electrodes 4A and 4B. A size $g_n$ of the DC electrodes 4A and 4B may decrease along the positive x-direction. A length $l_n$ of the DC electrodes 4A and 4B may increase along the positive x-direction. A size of the segments of the center DC electrode 6 measured in the x-direction may decrease along the positive x-direction and may substantially equal the size of opposite DC electrodes 4A and 4B. A length of the segments of the center DC electrode 6 measured in the y-direction may be substantially constant along the x-direction.

The device 600 may include one or more ground planes. In the illustrated example, the device 600 may include a ground plane 8 that may be arranged between the segmented center DC electrode 6 and the first RF electrode 2A and between the segmented center DC electrode 6 and the second RF electrode 2B. In addition, the ground plane 8 may be arranged between individual segments of the segmented center DC electrode 6. In the illustrated example, the ground plane 8 may be formed as a single piece. In further examples, the ground plane 8 may consist of multiple elements.

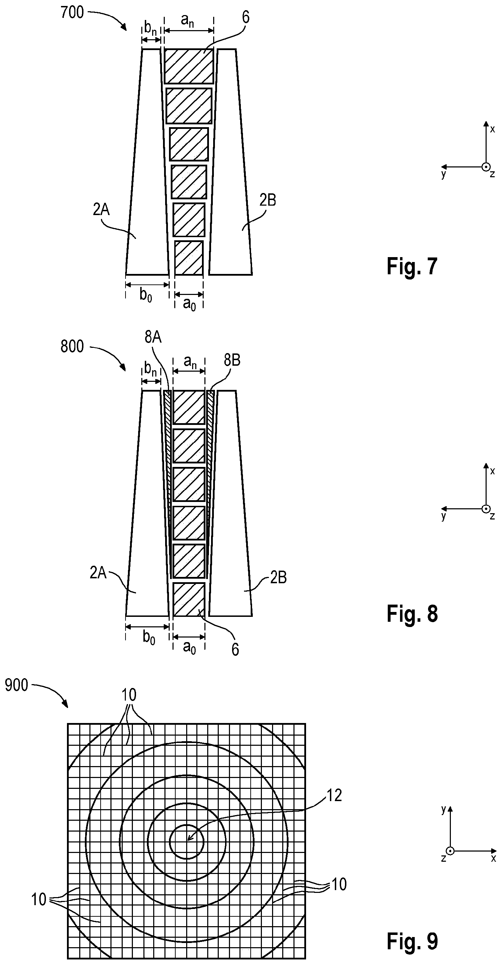

Referring now to Figure 7, a top view of a device 700 for controlling trapped ions is illustrated. Similar to previous examples, the device 700 may be configured to provide a shuttling of ions based on constant radial frequencies along the shuttling paths. The device 700 may include some or all features of previously described devices. The device 700 may correspond to or may include a surface ion trap having a five-wire geometry which may be symmetric with regard to an axis extending in the x-direction. The outer electrodes, which may be ground, are not shown for the sake of clarity and simplicity.

The device 700 may include two RF electrodes 2A, 2B and a segmented center DC electrode 6 arranged in between. A size of the segments of the center DC electrode 6 measured in the x-direction may be substantially constant along the x-direction, while a width $a_n$ of the segments measured in the y-direction may increase along the positive x-direction. In the illustrated example, the device 700 does not necessarily include a ground plane.

Referring now to Figure 8, a top view of a device 800 for controlling trapped ions is illustrated. Similar to previous examples, the device 800 may be configured to provide a shuttling of ions based on constant radial frequencies along the shuttling paths. The device 800 may include some or all features of previously described devices. The device 700 may correspond to or may include a surface ion trap having a five-wire geometry symmetric with regard to an axis extending in the x-direction.

The device 800 may include one or more ground planes. In the illustrated example, the device 800 may include a first ground plane 8A arranged between the segmented center DC electrode 6 and the first RF electrode 2A as well as a second ground plane 2B arranged between the segmented center DC electrode 6 and the second RF electrode 2B. All segments of the center DC electrode 6 may be of similar size or their size may change along the x-direction. In some examples, the device 800 may include additional ground planes arranged in an outer area of the RF electrodes 2A and 2B, i.e. to the left of the first RF electrode 2A and/or to the right of the second RF electrode 2B.

It is to be understood that aspects described in connection with the examples of Figures 2 to 8 may be combined to obtain additional examples. For example, in further cases, the center DC electrodes 6 in Figures 3 to 5 may be segmented similar to the examples of Figures 6 to 8, or, the device 800 may turn to device 600 at some point along the x-direction, i.e. the segmented DC electrodes 4A and 4B may arise firstly at some distance from the RF feeding point. It is further to be understood that devices in accordance with the disclosure may include shuttling paths that may be based on multiple of the described electrode layer geometries. For example, a shuttling path may include a first section having an electrode geometry similar to e.g. Figure 3, while a second section of the shuttling path may have an electrode geometry similar to e.g. Figure 5. Not all possible combinations of the presented geometries are discussed herein in detail.

Referring now to Figure 9, a device 900 for controlling trapped ions may include a plurality of shuttling paths 10 along which trapped ions may be shuttled. In the illustrated example, the shuttling paths 10 may form a rectangular grid including a plurality of X-junctions. It is to be understood that the present disclosure is not restricted to a specific arrangement and geometry of shuttling paths. In further examples, an arrangement of shuttling paths may differ. In one case, the device 900 may include a plurality of shuttling paths that may form a honeycomb grid.

The device 900 may include a structured electrode layer forming multiple electrodes of an ion trap configured to trap ions in a zone above the structured electrode layer. The multiple electrodes may include at least one RF electrode extending along a first direction and a plurality of DC electrodes arranged along the at least one RF electrode. In particular, the RF electrodes may be arranged along the shuttling paths 10. In the illustrated example, the electrodes of the device 900 are not shown in detail for the sake of simplicity. For example, structured electrode layers of the device 900 may be similar to one or more of the structured electrode layers described in connection with previous examples.

The RF device 900 may include an RF feeding point 12 configured to feed an alternating electrical current into the RF electrodes extending along the shuttling paths 10. In the illustrated example, the RF feeding point 12 may be arranged in the center of the device 900. In further examples, an RF feeding point may be arranged at a different position, such as at a periphery of the device 900.

The RF voltage may be the highest at the RF feeding point 12 in the center of the device 900. As described in connection with Figures 1 and 2, the RF voltage may decrease in a direction pointing away from the RF feeding point 12. That is, the further away from the RF feeding point 12, the lower the RF voltage may be. In the illustrated example, regions of the device 900 with substantially similar RF voltages may have the shape of circular rings arranged around the RF feeding point 12. The sizes of these rings may get smaller closer to the RF feeding point 12, because the injected electrical current may scale with the area of the regions. The center region may need to feed a larger area compared to the outer rings which may substantially need to feed no other regions. Accordingly, the electrical current may have lower values in the outer regions which may result in a larger radius of the respective ring for a same voltage drop.

As described in connection with previous examples, in order to guarantee an appropriate operation of the ion trap device and a stable shuttling of ions along the shuttling paths 10, it may be desirable to provide matching RF and DC voltages along the shuttling paths 10. For providing such matching, the DC voltages may be reduced in a direction pointing away from the RF feeding point 12 and may be adapted to the decrease of the RF voltages as previously discussed. In this context, it is to be understood, that the values of the decreasing RF voltages may depend on multiple properties, such as the overall geometry of the device 900, the shapes of the shuttling paths 10, the positions of X-junctions and/or T-junctions, material properties of the individual electrodes, etc. In practice, the values of the RF voltages (and thus the values of the DC voltages to be adjusted thereto) may be determined by means of simulations, such as e.g. FEM (Finite Element Method) and/or BEM (Boundary Element Method) simulations.

The device 900 may include electronic circuitry electrically coupled to the plurality of DC electrodes. The electronic circuitry may be configured to adjust a voltage at a respective DC electrode depending on a distance between the respective DC electrode and the RF feeding point 12. The voltage at the DC electrode may then match the voltage at a corresponding position of the RF electrodes such that constant radial frequencies may be provided along the shuttling paths 10. In the following, various examples of electronic circuitry for appropriately adjusting DC voltages are described.

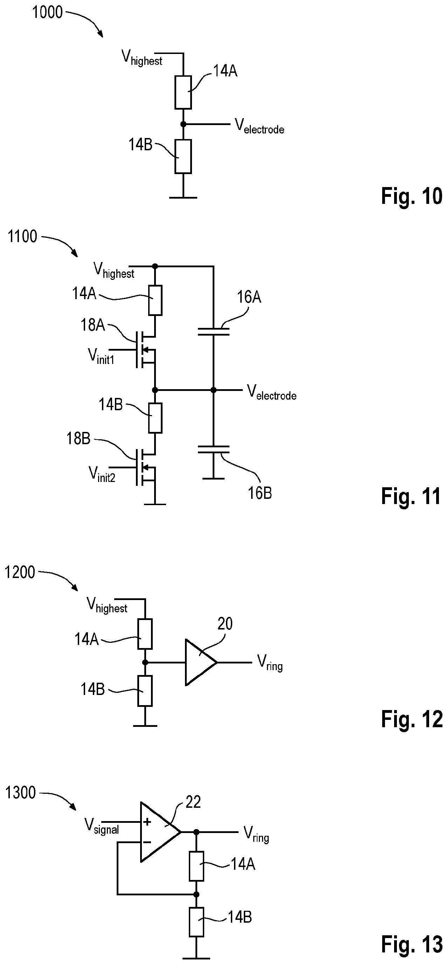

Figure 10 illustrates electronic circuitry 1000 that may be included in a device for controlling trapped ions, such as the device 900 of Figure 9. The electronic circuitry 1000 may include a plurality of resistive voltage dividers, of which only a single one is shown in Figure 10 for the sake of simplicity. Each of the resistive voltage dividers may be electrically coupled to a respective DC electrode. A resistive voltage divider may include two resistors 14A and 14B connected in series. The input voltage $V_{highest}$ applied across the two resistors 14A and 14B may correspond to the highest RF voltage applied at the RF feeding point 12. The output voltage $V_{electrode}$ may be provided to the respective DC electrode. The values of the resistors 14A and 14B may be chosen such that associated DC and RF voltages may match.

Figure 11 illustrates electronic circuitry 1100 that may be included in a device for controlling trapped ions, such as the device 900 of Figure 9. The electronic circuitry 1100 may include a plurality of capacitive voltage dividers, of which only a single one is shown in Figure 11 for the sake of simplicity. Each of the capacitive voltage dividers may be electrically coupled to a respective DC electrode. A capacitive voltage divider may include two capacitors 16A and 16B connected in series. The output voltage $V_{electrode}$ may be provided to the respective DC electrode. Compared to the electronic circuitry 1000 of Figure 10 that includes resistive voltage dividers, a usage of capacitive voltage dividers may reduce occurring bias currents.

Optionally, the capacitive voltage divider may include serially connected resistors 14A, 14B and transistors 18A, 18B that may be connected parallel to the capacitors 16A and 16B. The resistors 14A, 14B and transistors 18A, 18B may form circuitry configured to initialize the capacitive voltage divider. In this regard, initialization voltages $V_{init1}$ and $V_{init2}$ may be applied to gate electrodes of the transistors 18A, 18B.

Figure 12 illustrates electronic circuitry 1200 that may be included in a device for controlling trapped ions, such as the device 900 of Figure 9. The electronic circuitry 1200 may include a plurality of voltage dividers, of which only a single one is shown in Figure 12 for the sake of simplicity. Each voltage divider may include an amplifier 20 arranged at an output of the respective voltage divider. In large ion traps, a single output stage may not necessarily be configured to drive all segments of the ion trap. In such case, the segments of a circular ring may be associated with a specific amplifier providing the voltage required in the circular ring. That is, each voltage divider may be electrically coupled to multiple of the DC electrodes such that a voltage $V_{ring}$ output by the amplifier 20 may be provided to multiple DC electrodes. For example, the voltage $V_{ring}$ may be provided to the DC electrodes of a specific circular ring.

Figure 13 illustrates electronic circuitry 1300 that may be included in a device for controlling trapped ions, such as the device 900 of Figure 9. The electronic circuitry 1300 may include a plurality of amplifiers 22, of which only a single one is shown in Figure 13 for the sake of simplicity. Each of the amplifiers 22 may include or may be connected to a voltage divider. The voltage divider may be configured to adjust a gain of the amplifier 22. In this regard, the output of the voltage divider may be connected to an input of the amplifier 22, i.e. the output signal of the voltage divider may set the amplification of the tunable amplifier 22. Each amplifier 22 may be electrically coupled to multiple of the DC electrodes, such as the DC electrodes of a specific circular ring. A low voltage $V_{signal}$ may be provided which may be amplified by the amplifier 22 such that the output voltage $V_{ring}$ may be provided to the DC electrodes of the specific circular ring. An appropriate multiplication factor may need to be adjusted for each circular ring.

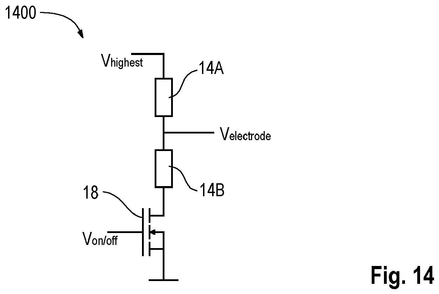

Figure 14 illustrates electronic circuitry 1400 that may be included in a device for controlling trapped ions, such as the device 900 of Figure 9. The electronic circuitry 1400 may e.g. be similar to the electronic circuitry 1000 of Figure 10. Each voltage divider may include or may be connected to a transistor 18. The transistor 18 may be configured to switch the voltage divider on or off. In this context, suitable voltages $V_{on}$ and $V_{off}$ may be applied to a gate electrode of the transistor 18, respectively. If a segment of the ion trap and associated DC electrodes are not used, the voltage divider may be switched off by the transistor 18 such that bias currents that may otherwise occur can be reduced.

It is to be understood that other electronic circuitry may be used for properly adjusting the DC voltages to the decreasing RF voltages. In a further example, electronic circuitry may include a plurality of digital-to-analog converters (DACs). Each of the DACs may be connected to a respective DC electrode. A DAC may be configured to multiply values of a voltage ramp with a pre-factor that may be chosen depending on the region of the ion trap (e.g. a circular ring) in which the DC electrode is located. In yet a further example, the DC voltages may be adjusted by means of a switching matrix.

It is to be understood that different electronic circuitry described in connection with the examples of Figures 10 to 14 may be combined. For example, a first electronic circuitry may be used in a first device region (e.g. a first circular ring), while a second circuitry may be used in a different second device region (e.g. a second circular ring). In a further example, referring back to Figures 10 and 11, a combination of a capacitive and a resistive voltage divider (e.g. having both in parallel) would be possible as well.

It is to be understood that the examples of devices for controlling trapped ions as described herein may be combined in various ways, as long as they are not mutually exclusive from a technical point of view. For example, any of the structured electrode layers of Figures 3 to 8 may be combined with any of the electronic circuitries of Figures 10 to 14 and vice versa.

It is to be understood that devices in accordance with the disclosure may include further technical features configured to counteract a decrease of voltages along RF electrodes. For example, a device for controlling trapped ions may include multiple RF feeding points such that a distance to the closest RF feeding point (and thus a decrease of RF voltages along the RF electrodes) may be reduced.

It is to be understood that devices in accordance with the disclosure may include various additional components which may have not been illustrated and described in detail for the sake of simplicity. For example, the described devices may further include at least one of a memory zone, a gate zone, a state readout zone, a loading zone, a laser source, a microwave source, means for controlling voltages applied to DC electrodes and/or RF electrodes, X-junctions, T-junctions, etc.

One or multiple of the components of the devices described herein may be at least partially manufactured based on a micro-fabrication technique. For example, structured electrode layers as previously described may be formed based on a micro-fabrication technique. Micro-fabrication techniques (e.g. for electrode formation and structuring) may include one or more of photolithography processes (such as e.g. photoresist application, patterning, etching), deposition processes (such as e.g. CVD, PVD, sputtering), plating processes (such as e.g. electroless plating, galvanic plating), etching processes, or the like. Electrodes formed in a structured electrode layer may be structured with micrometer or sub-micrometer scale precision and alignment accuracy, thereby allowing complex electrode layouts without loss of controllability of trapped ions.

Examples

In the following, devices for controlling trapped ions are described by means of examples.

Example 1 is a device for controlling trapped ions, the device comprising: a structured electrode layer, wherein the structured electrode layer forms multiple electrodes of an ion trap configured to trap ions in a zone above the structured electrode layer, wherein the multiple electrodes comprise: a first RF electrode and a second RF electrode extending along a first direction, and at least one center DC electrode arranged between the first RF electrode and the second RF electrode and extending along the first direction, wherein a first width of the first RF electrode and a second width of the second RF electrode decrease along the first direction.

Example 2 is a device according to Example 1, further comprising: a first plurality of first DC electrodes arranged adjacent to the first RF electrode opposite to the at least one center DC electrode, and a second plurality of second DC electrodes arranged adjacent to the second RF electrode opposite to the at least one center DC electrode.

Example 3 is a device according to Example 2, wherein: a width of the at least one center DC electrode increases along the first direction, and a length of the first DC electrodes and a length of the second DC electrodes are constant along the first direction, when measured in a second direction perpendicular to the first direction.

Example 4 is a device according to Example 2 or 3, further comprising: a ground plane arranged between the first RF electrode and the first DC electrodes and between the second RF electrode and the second DC electrodes.

Example 5 is a device according to one of Examples 2 to 4, further comprising: an RF feeding point configured to feed an alternating electrical current into at least one of the first RF electrode or the second RF electrode, wherein the first width of the first RF electrode and the second width of the second RF electrode decrease in a direction away from the RF feeding point.

Example 6 is a device according to one of Examples 2 to 4, further comprising: an RF feeding point configured to feed an alternating electrical current into at least one of the first RF electrode or the second RF electrode, wherein the first width of the first RF electrode and the second width of the second RF electrode increase in a direction away from the RF feeding point.

Example 7 is a device according to Example 2, wherein: a width of the at least one center DC electrode decreases along the first direction, and a length of the first DC electrodes and a length of the second DC electrodes increase along the first direction, when measured in a second direction perpendicular to the first direction.

Example 8 is a device according to Example 7, further comprising: a ground plane arranged: between the first RF electrode and the first DC electrodes and between the second RF electrode and the second DC electrodes, and/or between individual DC electrodes of the first DC electrodes and between individual DC electrodes of the second DC electrodes.

Example 9 is a device according to Example 2, wherein: a width of the at least one center DC electrode decreases along the first direction, and a length of the first DC electrodes and a length of the second DC electrodes decrease along the first direction, when measured in a second direction perpendicular to the first direction.

Example 10 is a device according to Example 2, wherein: a width of the at least one center DC electrode decreases along the first direction, and a shape of the first DC electrodes and a shape of the second DC electrodes changes along the first direction.

Example 11 is a device according to any of the preceding Examples, wherein the at least one center DC electrode is segmented.

Example 12 is a device according to Example 11, further comprising: a ground plane arranged between the at least one segmented center DC electrode and the first RF electrode and between the at least one segmented center DC electrode and the second RF electrode.

Example 13 is a device according to Example 11, further comprising: a ground plane arranged: between the at least one segmented center DC electrode and the first RF electrode and between the at least one segmented center DC electrode and the second RF electrode, and/or between individual segments of the at least one segmented center DC electrode.

Example 14 is a device for controlling trapped ions, the device comprising: a structured electrode layer, wherein the structured electrode layer forms multiple electrodes of an ion trap configured to trap ions in a zone above the structured electrode layer, wherein the multiple electrodes comprise: at least one RF electrode extending along a first direction, and a plurality of DC electrodes arranged along the at least one RF electrode; an RF feeding point configured to feed an alternating electrical current into the at least one RF electrode; and electronic circuitry electrically coupled to the plurality of DC electrodes and configured to adjust a voltage at a respective DC electrode depending on a distance between the respective DC electrode and the RF feeding point.

Example 15 is a device according to Example 14, wherein the electronic circuitry comprises a plurality of resistive voltage dividers, wherein each resistive voltage divider is electrically coupled to a respective DC electrode.

Example 16 is a device according to Example 14 or 15, wherein the electronic circuitry comprises a plurality of capacitive voltage dividers, wherein each capacitive voltage divider is electrically coupled to a respective DC electrode.

Example 17 is a device according to one of Examples 14 to 16, wherein the electronic circuitry comprises a plurality of voltage dividers, wherein each voltage divider comprises an amplifier arranged at an output of the respective voltage divider, and wherein each voltage divider is electrically coupled to multiple of the DC electrodes.

Example 18 is a device according to one of Examples 14 to 17, wherein the electronic circuitry comprises a plurality of amplifiers, wherein each amplifier comprises a voltage divider configured to adjust a gain of the amplifier, and wherein each amplifier is electrically coupled to multiple of the DC electrodes.

The features of the various examples described herein may be combined with each other unless specifically noted otherwise. Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

## Claims

1. A device for controlling trapped ions, the device comprising:

    a structured electrode layer, wherein the structured electrode layer forms multiple electrodes of an ion trap configured to trap ions in a zone above the structured electrode layer,

wherein the multiple electrodes comprise:

a first RF electrode (2A) and a second RF electrode (2B) extending along a first direction, and
at least one center DC electrode (6) arranged between the first RF electrode (2A) and the second RF electrode (2B) and extending along the first direction,

wherein a first width of the first RF electrode (2A) and a second width of the second RF electrode (2B) decrease along the first direction.

2. The device of claim 1, further comprising:

a first plurality of first DC electrodes (4A) arranged adjacent to the first RF electrode (2A) opposite to the at least one center DC electrode (6), and
a second plurality of second DC electrodes (4B) arranged adjacent to the second RF electrode (2B) opposite to the at least one center DC electrode (6).

3. The device of claim 2, wherein:

a width of the at least one center DC electrode (6) increases along the first direction, and
a length of the first DC electrodes (4A) and a length of the second DC electrodes (4B) are constant along the first direction, when measured in a second direction perpendicular to the first direction.

4. The device of claim 2 or 3, further comprising:
a ground plane (8) arranged between the first RF electrode (2A) and the first DC electrodes (4A) and between the second RF electrode (2B) and the second DC electrodes (4B) .

5. The device of one of claims 2 to 4, further comprising:

an RF feeding point (12) configured to feed an alternating electrical current into at least one of the first RF electrode (2A) or the second RF electrode (2B),
wherein the first width of the first RF electrode (2A) and the second width of the second RF electrode (2B) decrease in a direction away from the RF feeding point (12).

6. The device of one of claims 2 to 4, further comprising:

an RF feeding point (12) configured to feed an alternating electrical current into at least one of the first RF electrode (2A) or the second RF electrode (2B),
wherein the first width of the first RF electrode (2A) and the second width of the second RF electrode (2B) increase in a direction away from the RF feeding point (12).

7. The device of claim 2, wherein:

a width of the at least one center DC electrode (6) decreases along the first direction, and
a length of the first DC electrodes (4A) and a length of the second DC electrodes (4B) increase along the first direction, when measured in a second direction perpendicular to the first direction.

8. The device of claim 7, further comprising:
a ground plane (8) arranged:

between the first RF electrode (2A) and the first DC electrodes (4A) and between the second RF electrode (2B) and the second DC electrodes (4B), and/or
between individual DC electrodes of the first DC electrodes (4A) and between individual DC electrodes of the second DC electrodes (4B).

9. The device of claim 2, wherein:

a width of the at least one center DC electrode (6) decreases along the first direction, and
a length of the first DC electrodes (4A) and a length of the second DC electrodes (4B) decrease along the first direction, when measured in a second direction perpendicular to the first direction.

10. The device of claim 2, wherein:

a width of the at least one center DC electrode (6) decreases along the first direction, and
a shape of the first DC electrodes (4A) and a shape of the second DC electrodes (4B) changes along the first direction.

11. The device of any of the preceding claims, wherein the at least one center DC electrode (6) is segmented.

12. The device of claim 11, further comprising:
a ground plane (8) arranged between the at least one segmented center DC electrode (6) and the first RF electrode (2A) and between the at least one segmented center DC electrode (6) and the second RF electrode (2B).

13. The device of claim 11, further comprising:
a ground plane (8) arranged:

between the at least one segmented center DC electrode (6) and the first RF electrode (2A) and between the at least one segmented center DC electrode (6) and the second RF electrode (2B), and/or
between individual segments of the at least one segmented center DC electrode (6).

14. A device for controlling trapped ions, the device comprising:

a structured electrode layer, wherein the structured electrode layer forms multiple electrodes of an ion trap configured to trap ions in a zone above the structured electrode layer,
wherein the multiple electrodes comprise:

at least one RF electrode (2) extending along a first direction, and
a plurality of DC electrodes (4) arranged along the at least one RF electrode (2);

an RF feeding point (12) configured to feed an alternating electrical current into the at least one RF electrode (2); and
electronic circuitry electrically coupled to the plurality of DC electrodes (4) and configured to adjust a voltage at a respective DC electrode (4) depending on a distance between the respective DC electrode (4) and the RF feeding point (12).

15. The device of claim 14, wherein the electronic circuitry comprises a plurality of resistive voltage dividers, wherein each resistive voltage divider is electrically coupled to a respective DC electrode (4).

16. The device of claim 14 or 15, wherein the electronic circuitry comprises a plurality of capacitive voltage dividers, wherein each capacitive voltage divider is electrically coupled to a respective DC electrode (4).

17. The device of one of claims 14 to 16, wherein the electronic circuitry comprises a plurality of voltage dividers, wherein each voltage divider comprises an amplifier (20) arranged at an output of the respective voltage divider, and wherein each voltage divider is electrically coupled to multiple of the DC electrodes (4).

18. The device of one of claims 14 to 17, wherein the electronic circuitry comprises a plurality of amplifiers (22), wherein each amplifier (22) comprises a voltage divider configured to adjust a gain of the amplifier (22), and wherein each amplifier (22) is electrically coupled to multiple of the DC electrodes (4).

Fig. 1A

Fig. 1B

Voltage to reach 100V at the last segment

Fig. 2

Fig. 3

**Fig. 4**

**Fig. 5**

**Fig. 6**

Fig. 7

Fig. 8

Fig. 9

Fig. 10

Fig. 11

Fig. 12

Fig. 13

Fig. 14

Europäisches
Patentamt
European
Patent Office
Office européen
des brevets

**PARTIAL EUROPEAN SEARCH REPORT**

under Rule 62a and/or 63 of the European Patent Convention.
This report shall be considered, for the purposes of
subsequent proceedings, as the European search report

**Application Number**

EP 24 16 2244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 195 222 A1 (QUANTINUUM LLC [US]) 14 June 2023 (2023-06-14) | 1,11-13 | INV. G21K1/00 G06N10/40 |
| A | * paragraphs [0035], [0036], [0057] - [0060]; figures 1, 1A, 3 * | 10 | |
| X | KENNETH WRIGHT ET AL: "Paper;Reliable transport through a microfabricated X-junction surface-electrode ion trap;Reliable transport through a microfabricated X-junction surface-electrode ion trap", NEW JOURNAL OF PHYSICS, INSTITUTE OF PHYSICS PUBLISHING, BRISTOL, GB, vol. 15, no. 3, 4 March 2013 (2013-03-04), page 33004, XP020241736, ISSN: 1367-2630, DOI: 10.1088/1367-2630/15/3/033004 * the whole document * | 1-13 | |
| A | WO 2019/078377 A1 (ID QUANTIQUE S A [CH]; SEOUL NAT UNIV R&DB FOUNDATION [KR]) 25 April 2019 (2019-04-25) * figure 3 * | 7,9,10 | |

**TECHNICAL FIELDS SEARCHED (IPC)**

G21K
G06N
H01J

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 25 July 2024 | Sewtz, Michael |

EPO FORM 1503 03.82 (P04E07)

Europäisches
Patentamt

European
Patent Office

Office européen
des brevets

**INCOMPLETE SEARCH
SHEET C**

**Application Number**

EP 24 16 2244

Claim(s) completely searchable:
    1-13

Claim(s) not searched:
    14-18

Reason for the limitation of the search:

Limitation as requested by the Applicant on 18.07.2024 in response to the
invitation pursuant Rule 62a(1) of 18.06.2024.

## ANNEX TO THE EUROPEAN SEARCH REPORT
## ON EUROPEAN PATENT APPLICATION NO.

EP 24 16 2244

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2024

| Patent document cited in search report | Publication date | Patent family member(s) | Publication date |
|---|---|---|---|
| EP 4195222 A1 | 14-06-2023 | CN 116258208 A | 13-06-2023 |
| | | EP 4195222 A1 | 14-06-2023 |
| | | JP 7439223 B2 | 27-02-2024 |
| | | JP 2023086716 A | 22-06-2023 |
| | | JP 2024050895 A | 10-04-2024 |
| | | TW 202341019 A | 16-10-2023 |
| | | US 2023187095 A1 | 15-06-2023 |
| WO 2019078377 A1 | 25-04-2019 | NONE | |

EPO FORM P0459

For more details about this annex : see Official Journal of the European Patent Office, No. 12/82